# EUROPEAN PATENT APPLICATION

(11) **EP 2 286 679 A1**
(43) Date of publication of application: **23.02.2011**
(21) Application number: 09168129.6
(22) Date of filing: 19.08.2009
(51) Int. Cl.: A23L 1/305

(54) **Proteose peptone and lipase activity**

(71) Applicant: Nestec S.A., 1800 Vevey (CH)
(72) Inventor: Kolodziejczyk, Eric, 1800 Vevey (CH); Tedeschi, Concetta, 1004 Lausanne (CH); Acquistapace, Simone, 1814 La Tour de Peilz (CH); Bovetto, Lionel, 74500 Larringes (FR); Schmitt, Christophe, 1077 Servion (CH)
(74) Representative: Marquardt, Ulf

(57) **Abstract**

The present invention relates generally to the field of food and drink compositions containing a lipid fraction. Embodiments of the present invention relate to compositions and uses to retard fat uptake from consumed products. For example, the present invention relates to a specific proteose peptone fraction and its use to retard fat hydrolysis.

## Description

The present invention relates generally to the field of food compositions containing a lipid fraction. Embodiments of the present invention relate to compositions and uses to retard fat uptake from consumed products. For example, the present invention relates to a specific proteose peptone fraction and its use to retard fat hydrolysis.

Fats/oils have to be enzymatically hydrolyzed by lipases before being bioaccessible for absorption at the brush-border membrane of enterocytes in the intestinal lumen. Dietary Fat is composed mainly of triacylglycerols (the majority, ca. 95%). By the enzymatic action of lipases triacylglycerols (TAG) are ultimately hydrolysed into free fatty acids (FFA) and monoglycerides (MAG) that are easily absorbable by the body.

Because of the water soluble nature of lipases and of the low hydrophilic strength of fats and oils, the lipase catalyzed reactions take place at the oil/water interface.

Excessive lipid absorption will lead ultimately to overweightness and obesity and, consequently, also to metabolic disorders. It is predicted that only in the UK one in three adults-or 13 million people-will be obese by 2012, according to research published in the Journal of Epidemiology and Community Health.

To reduce the risk of weight gain and ultimately obesity when consuming fatty food compositions or drinks, it would be desirable to have available means that would allow it to retard fat absorption from consumed foods, while maintaining the pleasant mouthfeel and taste as well as health benefits that are delivered by the lipid fraction in food products.

Cartier et al. have described the fact that the conventional proteose peptone from milk enriched with the component PP3 reduces the natural lipolysis of milk whereas the same fraction depleted in PP3 is promoting milk lipolysis (1990, J. Dairy Sci 73:1173-1177). Girardet describes further the effect of state of the art PP3 from milk has on porcine pancreatic lipase and on milk endogenous lipase. They concluded that the PP3 fraction had no direct effect on lipase activity, but was more surface-active to the oil/water interface and was preventing the lipase to adsorb by a competition mechanism (1993, J. Dairy Sci 76:2156-2163).

It is well known that foaming is a typical feature of milk proteins. However, even after removal of caseins, α-lactalbumin and -lactoglobulin milk still conveys considerable surface activity (R. Aschaffenburg, J. Dairy Res. 14 (1945), 316-328). The remaining fraction contains the proteose peptone fraction (PPf), which comprises a significant amount of surface-active components.

PPf represent a heterogeneous mixture of poorly characterized proteinaceous compounds which are summarized in a review of the subject by Girardet et al., J. Dairy Res. 63 (1996), 333-350, which is incorporated herein by reference.

A number of proteins were described in the PPf, such as two glycoproteins, ppl6k and pp20k, with a binding affinity for the enterotoxin of *Escherichia coli.* They were identified as glycosylated forms of α-lactalbumin and of β-lactoglobulin, respectively. Osteopontin, an acidic 60 kDa phospho-glycoprotein, and the 38 kDa lactoferrin are among the larger proteins detected by sodium dodecyl sulfate polyacrylamide gel electrophoresis (SDS-PAGE).

The amounts of the main PPf components in a sample of milk, designated as components 3, 5 and 8 (PP3, PP5, PP8), are correlated with its plasmin activity. The following components are a result of plasmin activity on β-casein: PP5 or β-CN-5P f (1-105/7; N-terminal peptides 1-105 and 1-107 from β-casein), PP8-fast or β-CN-4P f (1-28; N-terminal peptide 1-28 of β-casein). Components PP8-slow and β-CN-1P f (29-105/7; N-terminal peptides 29-105 and 29-107 of β-casein) are separate entities that are difficult to differentiate by electrophoretic mobility.

The heterogeneous molecular structure of the PP3 components is illustrated by the following observations. PP3 phosphoglycoproteins form complexes with a size of 163 kDa (as measured by ultracentrifugation at pH 8.6) that can be dissociated into subunits with an apparent MW of 40 kDa using 5 M-guanidine. SDS-PAGE, when performed in the presence of the disulfide bond reducing agent 2-mercaptoethanol, revealed the presence of two major glycoprotein components of 24.6-33.4 kDa and 17-20.9 kDa, respectively. The main glycoproteins with an apparent molecular weight of 28 kDa and 18 kDa were virtually always observed and found to be associated with a band at 11 kDa. When resolved by two-dimensional polyacrylamide gel electrophoresis (2D-PAGE), they appear, respectively, as 4 and 2 spots, with apparent isoelectric points ranging from pH 4.9 to 6.1. The complex is composed of glycoproteins with molecular weights of 28 kDa, 18 kDa and 11 kDa, associated with non-glycosylated polypeptides with a molecular weight of about 7 kDa. Separation by lectin affinity chromatography with Concanavaline A (ConA), reveals a complex behaviour of the 11-, 18- and 28 kDa glycoproteins. The 11 kDa glycoprotein does not bind to ConA, whereas the larger 18 and 28 kDa forms were distributed between the non-binding fraction (called glycoproteins pp18⁻ and pp28⁻) and the binding fraction (called glycoproteins pp18⁺ and pp28⁺).

The PPf is obtained in the art usually from skimmed milk. Cow milk contains about 4 weight-% fat, about 3.5 weight-% protein, about 0.6 weight-% whey protein, and about 0.003 weight-% proteose peptone.

However, the isolation of the PPf according to the present state of the art involves a heat treatment (e.g., 10 min at 90°C) and a significant acidification of the milk to remove caseins and the denatured whey proteins by precipitation/centrifugation.

This conventional approach is expensive and non applicable at an industrial scale.

In particular the acidification step in the state of the art is usually performed at a relatively unspecific but low pH value. This will lead to a substantial coagulation of milk proteins. Over 90 % of the proteins present in milk will coagulate at these conditions. The removal of these coagulated proteins causes severe difficulties if a large scale purification of a proteose peptone fraction is attempted.

Consequently, it was an object of the present invention to provide food compositions that contain a lipid fraction that exhibits a delayed free fatty acid and/or monoglyceride uptake by the body and that can be easily prepared in industrial scale.

The present inventors were surprised to see that they could solve this object by the subject matter of the independent claims.

The inventors were previously able to provide a proteose peptone fraction that is improved compared to those known in the art.

This improved proteose peptone fraction may be obtained as described in patent application EP 08101805.3, which is herewith incorporated by reference.

Contrary to the proteose peptone fractions known in the art the production of this improved proteose peptone fraction is industrially applicable, since significant protein agglomeration during the acidification step is avoided. The precise adjustment of the pH values (±0.1 pH units) before the heat treatment, leads to the formation of spherical whey proteins particles with a diameter of less than 1 µm rather that bulk protein aggregates as in the prior art. These spherical whey proteins particles are much easier to remove from the proteose peptone fraction than a bulk protein precipitate as in the prior art.

This resulting proteose peptone fraction exhibits furthermore improved heat stability. Additionally, it can be used to stabilize oil/water interfaces equally well as proteose peptone fractions obtained conventionally in the art today.

Further, the inventors were able to demonstrate, that contrary what is presently suggested in the art, the proteose peptone fraction is not only able to delay lipolysis if it is present at the oil-water interface, but also when it is present in the bulk phase.

The proteose peptone fraction to be used in the present invention inhibited lipase action at the boundary between oil and water, thus preventing or at least delaying lipolysis, in other words the generation of free fatty acids (FFA) and monoglycerides (MAG) from triacylglycerols (TAG).

It also inhibited lipase action, when the proteose peptone fraction was present in the watery bulk phase and consequently also delayed the generation of free fatty acids (FFA) and monoglycerides (MAG) from triacylglycerols (TAG) in the watery bulk phase.

Importantly, the inventors could show that the addition of a proteose peptone fraction produced a much more pronounced effect in terms of delaying fat absorption than other protein fractions, e.g., beta-lactoglobulin, beta-casein, and whey protein isolate did.

For example, the proteose peptone fraction of the present invention may be added into the aqueous bulk phase of a food product. The proteose peptone fraction of the present invention may also be added into the aqueous bulk phase of O/W emulsions for further delaying the digestion of already coated oil droplets, where the existing coating contains an emulsifier. This emulsifier can be a low and/or high molecular weight emulsifier. For example, surfactants, proteins, and/or polysaccharides may be used.

Evidence for the described effects has been obtained by simulated *in-vitro* digestion experiments of dietary lipids.

The proteose peptone fraction of the present invention was effective in terms of slowing down lipid hydrolysis when present in the bulk phase as well as when present as a coating layer of an oil droplet.

Hence, one embodiment of the present invention is the use of proteose peptone for the preparation of a lipid containing food product that exhibits a retarded lipid digestibility, wherein the proteose peptone is obtainable by a process comprising the following steps:
- adjustment of the pH of a demineralised aqueous native protein dispersion to about 5.6 to 8.4, or to about 3.5 to 5.0
- heating the aqueous native protein dispersion to about 70-95 °C for about 10 seconds to 60 minutes
- removing at least a part of the formed solid large molecular weight aggregates with a diameter of at least 100nm from the aqueous protein dispersion after heating and
- collecting the remaining liquid fraction of the dispersion.

The oil/fat in the present invention may be any kind of edible oil. A material is considered edible if it is approved for human or animal consumption.

For example, the oiland/or fat may be selected from the group consisting of medium chain triglycerides (MCT), butter fat, linseed oil, tung oil, soybean oil, olive oil, palm oil, sunflower oil, walnut oil, almond oil, peanut oil, hazelnut oil, eno oil, evening primrose oil, cherrykernel oil, grape seed oil, sesame oil, maize oil, rape seed oil, cotton seed oil, rice bran oil, corn oil, rye oil, wheat embryo bud oil, avocado oil, camellia oil, macadamia nut oil, sardine oil, mackerel oil, herring oil, cod-liver oil and oyster oil, apricot oil, safflower oil, rapeseed oil, lupin oil, peach oil, tomato oil, linseed oil, citrus oil, or combinations thereof.

The improved proteose peptone fraction that is obtainable by the process described may be produced from a demineralised protein fraction, for example from a demineralised globular protein fraction, in particular from a whey protein concentrate (WPC) or whey protein isolate (WPI).

Whey is an inexpensive raw material, being usually a waste product of, e.g., cheese production. The process of cheese making requires the addition of rennet, a proteolytic enzyme that coagulates the milk, causing it to separate into a curd (future cheese) and a soluble whey fraction.

Whey may comprise whey from either bovine, or buffalo, or sheep, or goat, or horse, or camel sources or mixtures thereof.

Furthermore, since WPIs are almost fat-free, fat removal becomes obsolete during the production of the PPf, simplifying the process and further preventing the PPf from contamination.

The proteose peptone fraction to be used in the present invention may be depleted in - lactoglobulin and demineralised.

"Demineralised" means for the purpose of the present invention, a mineral content that is reduced by at least 25%, preferably by at least 50 %, more preferred by at least 75 % as compared to either sweet or acid whey. The dry matter of sweet or acid whey contains, on average, 8,8 % minerals, including 0.9 % calcium, 0.8 % sodium, 2.2 % potassium, 0.1 % magnesium, 0.7 % phosphorus and 2.0 % chloride.

In the context of the present invention, "depleted in - lactoglobulin" means that the weight content of - lactoglobulin relative to the total weight of proteins in the extract is at most 70 %, preferably at most 50 % even more preferred at most 20 % as compared to the weight content of - lactoglobulin relative to the total weight of protein in the native globular protein solution.

Hence, an extract depleted in -lactoglobulin comprises at most 70 weight-%, preferably at most 50 weight- % even more preferred at most 20 weight-% of the amount of -lactoglobulin present in the native globular protein solution.

The proteose peptone fraction to be used the present invention may also be enriched in α-lactalbumin. Enriched in α-lactalbumin means that the weight content of α-lactalbumin relative to the total weight of protein in the extract is at least 1.2-fold, preferably at least 1.5-fold, even more preferred at least 2-fold increased as compared to the weight content of α-lactalbumin relative to the total weight of protein in the initial native globular protein dispersion.

In the process leading to the proteose peptone fraction of the present invention, the pH of demineralised aqueous native protein dispersion is adjusted to about 5.6 to 8.4, or to about 3.5 to 5.0.

More precisely, the pH may be adjusted to about 3.5 - 5.0, or to about 5.6 - 6.4, preferably to about 5.8 to 6.0, or to about 7.5 - 8.4 preferably to about 7.6 to 8.0, or to about 6.4 - 7.4 preferably to about 6.6 to 7.2.

During the extensive experiments, leading to the present invention, the inventors surprisingly noted that when adjusting the pH to very precise pH values (±0.1 pH units) before the heat treatment, spherical particles of whey proteins aggregates are obtained, which displayed a diameter of less than 1 µm.

The optimal pH-value was found to be dependent on the concentration and composition of the starting material, e.g. WPI. This method has the advantage of generating whey protein particles in the absence of any mechanical stress, e.g. shearing. The resulting particulation provides for an easy removal of the compounds forming these particles from the PPf-containing fraction of the present invention.

pH and ionic strength were found to be two important factors of the presented method. Accordingly, extensively dialyzed samples, which are strongly depleted of free cations such as Ca++, K+, Na+, Mg++, tend to generate curds at a pH below 5.4 and soluble whey protein aggregates at a pH exceeding 6.8, after the described heat treatment was applied.

Hence, only a rather narrow range of pH values is providing the type of solid whey protein particles which are industrially easy to remove in the preparation of the proteose peptone fraction to be used in the present invention.

Similar whey protein particles are produced by using a pH value situated symmetrically below the isoelectric pH of whey, i.e from 3.5 to 5.0.

Negatively charged whey particles are obtained, if the pH is adjusted within the pH range from 5.6 to 6.4, more preferably from 5.8 to 6.0 for a low concentration (below 0.2g for 100 g of in initial whey protein powder) of divalent cations. The pH may be increased up to 8.4 depending on mineral content of the whey protein source (e.g. WPC or WPI).

In particular, the pH may be adjusted from 7.5 to 8.4, preferably from 7.6 to 8.0, to obtain negatively charged particles in the presence of large amounts of free minerals.

The pH may be adjusted from 6.4 to 7.4, preferably from 6.6 to 7.2, to obtain negatively charged particles in presence of moderate concentrations of free minerals.

The concentration of free minerals is considered as low, if less than 2g of free minerals are present in 100 g of native protein powder.

The concentration of free minerals is considered as moderate, if between 2g and 5g of free minerals are present in 100 g of native protein powder.

The concentration of free minerals is considered as high, if more than 5g of free minerals are present in 100 g of native protein powder.

Of course, particle charge may also be used as a tool to separate these particles from the proteose peptone fraction to be used in the present invention.

The pH may generally be adjusted by the addition of an acid, which is preferably food grade, such as e.g. hydrochloric acid, phosphoric acid, acetic acid, citric acid, gluconic acid or lactic acid. When mineral content is high, the pH is generally adjusted by the addition of alkaline solution, which is preferably food grade, such as sodium hydroxide, potassium hydroxide or ammonium hydroxide.

For the method cf the present invention, essentially salt-free aqueous native whey protein dispersion is preferred. "Essentially salt free" means a salt content of 1g/L or below for a protein concentration of about 4 wt.-%. For example an aqueous whey protein solution may contain less than 2.5 wt.-% of its total dry mass in divalent cations, more preferably less than 2 wt.-%.

The native proteins, preferably native globular proteins, even more preferred whey proteins are present in the aqueous native protein dispersion in an amount of about 0.1 wt-% to 12 wt. %, preferably about 0.1 wt.-% to 8 wt.-%, more preferably about 0.2 wt-% to 7 wt.-%, even more preferably about 1 wt.-% to 5 wt.-% on the basis of the total weight of the solution.

In the method of the present invention it is preferred if the aqueous native whey protein dispersion is heated about 15 minutes to about 85 °C.

In principle, the formed solid large molecular weight aggregates with a diameter of at least 100 nm can be removed from the aqueous whey protein dispersion after heating by any means that are known in the art. However, removal of large molecular weight aggregates can preferably be performed by sedimentation, centrifugation, filtration, microfiltration, or combinations of these methods. This removal step may be accompanied by a further pH adjustment.

Sedimentation has the advantage that the experimental equipment required is minimal and that this can be carried out with a minimum of energy input.

Centrifugation is a fast method that however involves energy input. Continuous centrifugation is a process that is already in use in factories, fcr example for white cheese making.

Filtration and microfiltration are well applicable for large scale production and are very reliable in removing large molecular weight aggregates.

By combining several of theses methods, their respective advantages may be combined.

For example, by applying a last step microfiltration procedure, a substantially complete removal of large molecular weight aggregates with a diameter of at least 100 nm can be achieved.

Preferably at least 90 %, more preferably 95 %, most preferred at least 99 % and ideally 100 % of the solid large molecular weight aggregates with a diameter of at least 100 nm are removed from the aqueous whey protein dispersion after heating.

The method of the present invention may also further comprise an ultrafiltration and/or evaporation step.

Ultrafiltration is a membrane filtration technique exploiting hydrostatic pressure to force a liquid through a semipermeable membrane. Suspended solids and high molecular weight solutes are retained, while water and low molecular weight solutes cross the membrane. This separation process is used in industry and research to purify and concentrate solutions containing large molecular weight molecules (10³ - 10⁶ Da), especially proteins. Ultrafiltration has the advantage of being well established in an industrial environment, allowing an efficient and, at the same time, gentle separation of large molecular weight proteins, which prevents stress-induced protein denaturation.

Evaporation is a gentle method that allows the concentration of the protein solution. Evaporation may be, for example, triggered by heating, e.g., to at least 40 °C, or preferably to at least 60° C. For example, the composition comprising the PPf may be dried to reduce the water content to below 10 wt.-%, preferably to below 5 wt.-%, even more preferred to below 2 wt.-% based on the weight of the total composition. This drying step has the advantage that the obtained proteose peptone fraction can be stored at high concentrations reducing the weight of the composition while maintaining its full activity. Low water activity provided by evaporation also ensures a higher stability of the product.

The proteose peptone fraction obtainable by the method described above has an amino acid composition in percentage of the total amino acid composition as follows: about 6-9 % ASP, about 4-7 % THR, about 4-7 % SER, about 22-25 % GLU, about 9-12% PRO, about 0-3 % GLY, about 1,5-4,5 % ALA, about 4 - 7 % VAL, about 0-2 CYS, about 1-4 % MET, about 4 - 7 %ILE, about 7.5-10.5 % LEU, about 0 - 3 % TYR, about 6.7-9.7% LYS, about 1.5-4.5 % HIS, about 1-4 % ARG.

This amino acid composition differs from the typical composition of the PPf obtained by a conventional method.

In Table 1, the typical PPf-amino acid profiles corresponding to the conventional method (sample 1) and the PPf (to be used in the present invention, sample 2) are provided and can be compared.

Sample 1 was prepared from the same WPI as sample 2 using the conventional method according to Paquet, D. Nejjar, Y.,& Linden, G. (1988); Study of a hydrophobic protein fraction isolated from milk proteose-peptone. Journal of Dairy Science, 71, 1464-1471).

Briefly, Prolacta 90 was used as starting material. Prolacta 90 (428g of powder containing 84% protein :Nx6.38) was reconstituted in 5 L of Milli-Q grade H₂O. A pH of 6.43 was measured for this solution, which was then adjusted to pH 7.00 by adjunction of about 15 mL of NaOH 1N. The volume of this solution was adjusted to 6 L (the final protein concentration was 6% (w/w)) and equally distributed into six 1L-bottles, which were positioned for 30 min in a water bath set at 93°C to denature the proteins. A temperature of 90°C was reached inside the bottle after 20 min of incubation. At the end of incubation, the bottles were placed into an ice bath and cooled down to 20°C. Isoelectric precipitation of the proteinaceous compounds was performed by adjusting the pH to 4.6. Practically, the content of three 1L-bottles were pooled (pH 7.17) and the pH adjusted to 4.6 using about 88 mL of HCl 1N. The other three 1L-bottles were processed identically. The resulting two acidified solutions were pooled, stored at 4 °C for 18h and equally distributed into six 1L-plastic bottles. After centrifugation of the bottles (60 min at 6°C, 5000 rpm/7200g, Sorval RC3C Plus fitted with a H 6000A rotor), the PPf-containing supernatants were recovered. Then, ammonium sulfate precipitation of the PPf was performed at half saturation (313 g/L) during 2h. The precipitates were recovered after centrifugation (60 min at 6°C and 5000 rpm using a Sorval RC3C Plus), pooled and redispersed in 350 mL of Milli-Q grade H₂O. The cloudy suspension/solution was dialyzed 4 times against 22 L of Milli-Q grade H₂O using a Spectrapor membrane tubing with a MW cut-off of 1000 (Spectrum Laboratories inc.). After dialysis, the extract containing the PPf was centrifuged (60 min at 6°C and 5000 rpm) and the supernatant filtrered (0.22 µm filter, GP Stericup^{®} Express plus^{™} from Millipore) and freeze dried. The yield of the PPf was 6g (1.6 %) from a total whey protein load of 360g.

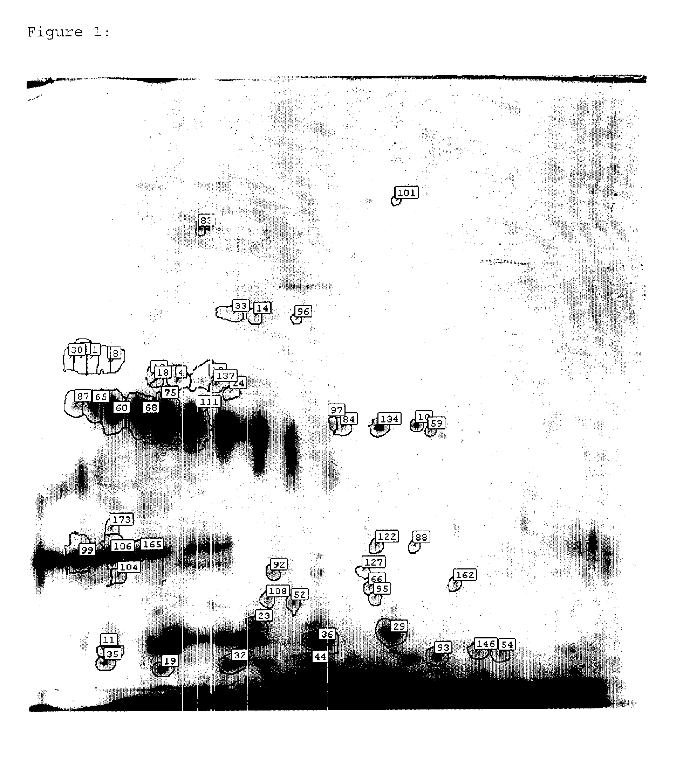

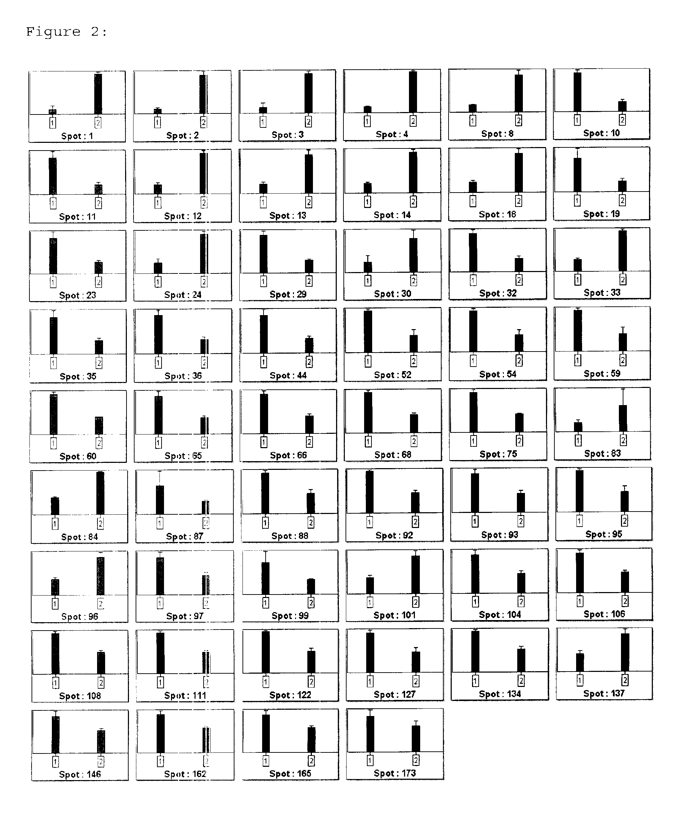

For example, the two following criteria allow to differentiate the resulting PPf of the state of the art and the improved proteose peptone fraction described in the present invention: the amino acid profile (Table 1) and the protein profile as determined by 2D-PAGE (Figures 1 and 2).

**Table 1: Amino acid composition of the conventional PPf (sample 1) and the improved proteose peptone fraction to be used in the present invention (sample 2), expressed either as g of each amino acid per 100 g powder, or in percentage of the total amino acid composition.**

| **g/100g sample** | | | | **% A.A.** | | |
|---|---|---|---|---|---|---|
| A.A. | Sample 1 | Sample 2 | | A.A. | Sample 1 | Sample 2 |
| ASP | 10.0 | 6.2 | | ASP | 12.2 | 7.5 |
| THR | 4.1 | 4.8 | | THR | 5.0 | 5.7 |
| SER | 4.3 | 4.9 | | SER | 5.2 | 5.8 |
| GLU | 16.5 | 19.5 | | GLU | 20.2 | 23.4 |
| PRO | 5.0 | 8.8 | | PRO | 6.1 | 10.5 |
| GLY | 1.7 | 1.3 | | GLY | 2.1 | 1.6 |
| ALA | 2.0 | 2.4 | | ALA | 2.4 | 2.9 |
| VAL | 3.9 | 4.4 | | VAL | 4.8 | 5.3 |
| CYS | 1.80 | 0.19 | | CYS | 2.2 | 0.2 |
| MET | 1.35 | 1.98 | | MET | 1.7 | 2.4 |
| ILE | 5.1 | 4.7 | | ILE | 6.2 | 5.7 |
| LEU | 8.1 | 7.5 | | LEU | 9.9 | 9.0 |
| TYR | 2.4 | 1.3 | | TYR | 3.0 | 1.6 |
| PHE | 3.5 | 4.0 | | PHE | 4.3 | 4.8 |
| LYS | 7.6 | 6.9 | | LYS | 9.3 | 8.2 |
| HIS | 2.3 | 2.4 | | HIS | 2.9 | 2.8 |
| ARG | 2.0 | 2.1 | | ARG | 2.4 | 2.6 |
| Total: | 81.8 | 83.5 | | Total: | 100.0 | 100.0 |

2D-PAGE is a powerful method to analyze and compare complex protein mixtures. This method segregates proteins according to their charge, in the first dimension, and according to molecular weight, in the second dimension.

The present inventors have used this 2D-PAGE to analyze the differences existing between the PPf obtained using a conventional method and the PPf to be used in the present invention. The same WPI was used to produce both the PPf prepared according to the conventional method and the PPf to be used in the present invention. The conventional PPf was prepared according to the method described by Paquet, D. Nejjar, Y.,& Linden, G. (1988); Study of a hydrophobic protein fraction isolated from milk proteose-peptone. Journal of Dairy Science, 71, 1454-1471). Figure 1 shows the 2D-PAGE protein profile of the FPf obtained according to the present invention. All the labelled protein spots of the 2D-Gel of Figure 1 differ qualitatively and/or quantitatively from the protein spots of the 2D-Gel generated by the conventionally-prepared PPf. Figure 2 shows a quantification of the observed differences.

An analysis of the PPfs was performed according to the following procedure.
- dissolve the equivalent of 250 µg protein from the protein solution, in particular the PPf, in 340 µl of a denaturing solution consisting of urea, thiourea, CHAPS, Tris, DTT, ampholytes, used at the final concentrations of 7 M, 2 M, 65 mM, 20 mM, 65 mM, 0.4 % (w/v), respectively, and of bromophenol blue for cclouring,
- loading this sample onto a pH gradient immobiline strip from pH 3 to pH 10 on a 9 to 16 % acrylamide gel prepared with 1.5 M Tris buffer.
- applying a voltage of 300 volts for 11.6 h and then 5000 volts for 12.4 h across the immobiline strip gel to separate the proteins by charge,
- positioning the immobiline strip gel onto an acrylamide gradient gel ranging from 9 to 16 % acrylamide, in a buffer of 25 mM Tris/192 mM Glycine/0.1% SDS (w/v), pH 8.3.
- applying a 40 mA current across the gel overnight, to draw the proteins previously separated on the Immobiline strip gel

into the acrylamide matrix and further to separate them according to size,
- visualizing the protein spots by Coomassie blue staining This procedure allowed the generation of a gel as depicted in figure 1.

When the improved proteose peptone fraction is used for the preparation of a lipid containing food product that exhibits a retarded lipid digestibility, the proteose peptone fraction and the lipids may be provided in a weight ratio in the range of 1:2 to 1:2000, for example in the range of 1:2 to 1:1000, preferably in the range of 1:10 to 1:100.

While it was previously assumed that lipase activity can only be efficiently inhibited at the oil water interface where lipases are active, the present inventors were able to show that lipase activity can also be inhibited, if the proteose peptone fraction is added to the watery bulk phase. For industrial application this is important since adding proteose peptone simply to the watery bulk phase is much simpler to accomplish than having to place the proteose peptone fraction at the interface between water and oil.

However, the proteose peptone fraction was also found to be effective at the oil water interface. In products where a lot of oil/water interfaces are present, such as in emulsions or foamed emulsions, this can be used effectively.

Hence, the proteose peptone fraction and the lipids in the food product may be provided at least in part as a coated oil droplet comprising at least one coating layer, wherein at least one coating layer contains proteose peptone.

If the oil particle is coated by more than one coating layer, the proteose peptone may be present in any one of these coating layers.

The coated oil droplet may also comprise at least one coating layer, wherein at least one coating layer consists of the proteose peptone fraction.

It can be visualized that if an oil droplet is covered by a layer comprising the proteose peptone fraction, the activity of a lipase that attempts to act on the oil droplet is severely hindered.

For oil droplets with more than one coating layer it is preferred if a coating layer containing proteose peptone is the outer coating layer.

If present, further coating layers may contain any type of emulsifier, preferably food grade emulsifiers. Such emulsifiers may have a low or a high molecular weight. Low molecular weight emulsifiers have a molecular weight of below 1000 Da, while high molecular weight emulsifiers have a molecular weight of above 1000 Da.

The emulsifiers may be surfactants, such as proteins or polysaccharides, for example.

If present, further coating layers may contain or consist of at least one protein fraction. These protein fractions may be derived from milk, whey or soy. Preferred protein fractions may comprise whey proteins, α-lactalbumin, β-lactoglobulin, bovine serum albumin, acid casein, caseinates, α-casein, β-casein, κ-casein, or combinations thereof.

The protein fraction contained in the at least one further coating layer may be selected from the group consisting of beta-lactoglobulin, whey protein isolate and beta-casein, for example.

The coated oil droplet may have any dimension. The size of the droplet may have an influence on the overall speed of lipolysis; however, proteose peptone will always slow down the speed of lipolysis, independent of the size of the droplet.

Preferably, however, the coated oil droplets have dimensions which are applicable in food products. For example, the droplets may be present in an emulsion or foamed emulsion.

Emulsions or foamed emulsions are used in food products for example as mayonnaises, ice creams, sauces or creamers.

Typically, the coated oil droplet may have a diameter in the range of 0.1 - 100 µm, preferably in the range of 0.5-50 µm.

Usually, the coated oil droplet sizes may exhibit some Gaussian size distribution. This distribution may be somewhat narrowed down, if monodisperse emulsions are used.

Consequently, the presented sizes of the coated oil droplets represent average values.

The thickness of the emulsifier coating, such a proteose peptone fraction coating, for example, is variable and may be adjusted to the effect wanted.

The degree of retardation of lipase action was found to be dose dependant, so that larger doses of proteose peptone fraction will produce more pronounced effects.

Consequently, by modulating the oil/proteose peptone fraction ratio the times required for metabolizing fat may be modulated. Also, larger oil surfaces will generally require more proteose peptone fraction in terms of weight-% to cover these surfaces effectively.

Hence, those skilled in the art will be able to determine, e.g., based on the droplet size and the lipase retardation aimed for, the preferred oil/proteose peptone fraction weight ratio for a particular product.

Usually, however, proteose peptone fraction and oil are present in an oil droplet in a weight ratio in the range of 1:2 to 1:2000.

The food product prepared by the use of the present invention may be a food composition, an animal food product, a pharmaceutical composition, a nutritional composition, a nutraceutical, a drink, or a food additive.

Typical food products include products such as creamers, in particular coffee creamers, foamed beverages such as cappuccino, coffee latte, chocolate, yoghurt, pasteurized UHT milk, sweet condensed milk, fermented milks, milk-based fermented products, milk chocolate, mousses, foams, emulsions, ice cream, agglomerated powders to prepare beverages, milk based powders, infant formulae, diet fortifications, pet food, tablets, dried oral supplements, wet oral supplements and/or health care nutrition formulas and cosmetic products.

A typical food product in accordance with the present invention may for example comprise at least 20 weight-%, at least 35 weight-%, at least 50 weight-%, or at least 75 weight-% of the lipids as coated oil droplets.

The proteose peptone fraction and the lipids may be present in food products at least in part in the form of an emulsion. Additionally or alternatively, the proteose peptone fraction and the lipids may be present in food products at least in part in the form of a foam.

Using a proteose peptone fraction together with lipids in the production of food products will result in food products with a retarded and/or decreased lipid hydrolysis.

As a consequence, the lipids will remain undigested for longer periods of time prolonging the feeling of satiety after the consumption of the food product.

Further, an increased percentage of the lipids ingested may not be digested at all but secreted, leading to a decreased calorie usage from the food consumed.

For example, these properties make the food products prepared by the use of the present invention ideal for weight management product.

Consequently, embodiments of the present invention relate to food products prepared by the uses of the present invention for supporting weight loss and/or weight maintenance in humans and/or animals.

The present invention also relates to the use of a proteose peptone fraction obtainable by the process described above for the preparation of a composition, for example a food product for supporting weight loss and/or weight maintenance.

Embodiments of the present invention also relate to food products prepared by the uses of the present invention for use in the treatment or prevention of overweightness and/or obesity.

"Overweight" is defined for an adult human as having a BMI between 25 and 30.

"Obesity" is a condition in which the natural energy reserve, stored in the fatty tissue of animals, in particular humans and other mammals, is increased to a point where it is associated with certain health conditions or increased mortality. "Obese" is defined for an adult human as having a BMI greater than 30.

"Body mass index" or "BMI" means the ratio of weight in Kg divided by the height in metres, squared.

Directly associated with obesity are typically metabolic disorders.

Consequently, food products prepared by the use of the present invention may also be used to treat or prevent metabolic disorders. The metabolic disorders may be selected from the group consisting of diabetes, hypertension and cardiovascular diseases, for example.

Those skilled in the art will understand that they can freely combine all features of the present invention described herein, without departing from the scope of the invention as disclosed. In particular, features described for the uses of the present invention may be applied to the food product of the present invention and vice versa.

Further advantages and features of the present invention are apparent from the following Examples and Figures.
Figure 1 shows a 2D-PAGE of the PPf to be used in the present invention.
Figure 2 shows the quantification of proteins labelled in the gel of figure 1.

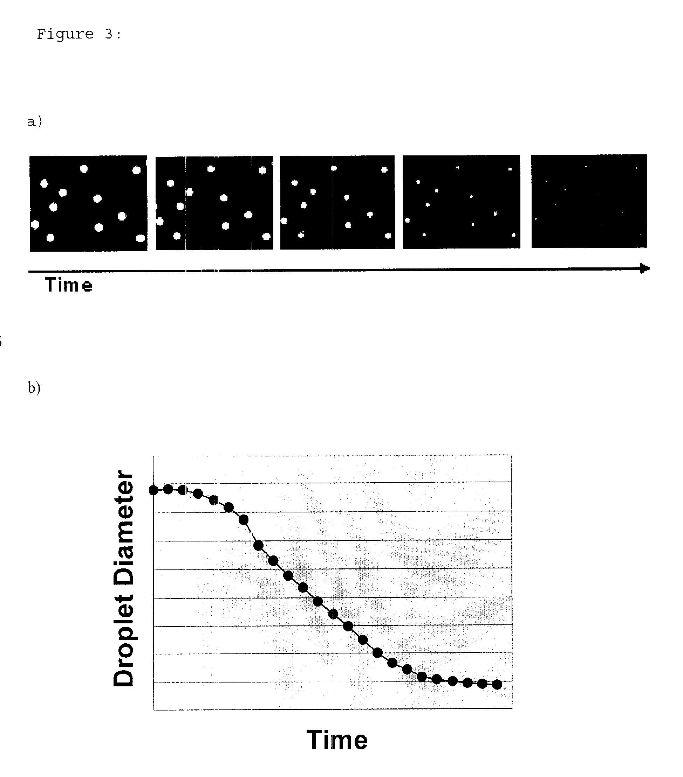

Figure 3 shows a) a time lapsed series of microscopy images recorded from stained O/W emulsion droplets under *in-vitro* intestinal medium. b) the kinetics of emulsion digestion obtained as the decrease in the normalized average droplets diameter over time.
Figure 4 shows the digestion kinetics of oil in water emulsions (MCT/WPI) to which different proteins at equal concentration (w/w) has been added to the aqueous bulk phase during intestinal simulated in-vitro digestion experiments.
PPC is the conventional proteose peptone fraction, while PP-fraction stands for the proteose peptone fraction to be used in the present invention.
Figure 5 shows the digestion kinetics of oil in water emulsions (MCT/WPI) to which different proteins have been added to the aqueous bulk phase during intestinal simulated in-vitro digestion experiments. Results for the Proteose Peptone fraction to be used in the present invention (PP) and the conventional Proteose Peptone (PPC) are presented at two different concentrations (0.125 and 1.5 wt%).

### Examples:

### Proteose peptone fraction

1. Extraction of a PFf-enriched fraction corresponding to the present invention:
   110 kg of Prolacta 90 (Lot 7, Lactalis, Rétiers, France) was dispersed in 2390 kg of soft water (containing 160 mg.L⁻¹ Na⁺) at 15°C. It was maintained under constant stirring and recirculation fcr 1 hour in a 3000 L tank equipped with a pH probe. The resulting pH of the protein dispersion was 6.68 and the total solids content (TS) was 4.5%. The pH was then adjusted to 5.95±0.05 by addition of about 10 kg of 1M HCl. This specific pH value was found to be the optimum for the formation of whey protein aggregates (WPAs) using soft water in a lab-scale environment (WPAs' average diameter: 250 nm; turbidity at 50C nm: >70). The optimal pH value was found to be very stable under these processing conditions. The Prolacta 90 dispersion was then pumped at a flow rate of 1200 L.h⁻¹ and heat treated using a plate heat-exchanger at 85°C, a holding time of 15 minutes and a cooling step to 4°C. The resulting WPA-containing whey dispersion (4.2% TS) was stored at 4°C.

WPAs were then removed by microfiltration (MF) of 500 kg of WPA-containing whey dispersion using 2 Carbosep M14 ceramic/carbon membranes (pore size 0.14 micron) with a total surface of 6.8 m². The temperature of the module was set at a temperature of 55°C and the pressure at 2.3 bars. The permeate flux remained around 400 1.h⁻¹ after 5 hours of microfiltration. The final total solids (TS) of the retentate to be discarded was 20%, which essentially contains the WPAs. The microfiltration permeate corresponding to the PPf of the present invention had a total solid content of about 0.43%. In an additional concentration step, the microfiltration permeate was further submitted to an ultrafiltration process at 10°C using a membrane with a MWCO of 20 kDa in order to increase the TS from 0.43 to 2.4%, and the protein content from 19 to 82% on the dry basis of the extract.

### Delaying fat digestion by the proteose peptone fraction

From *in vitro* and *in vivo* studies it is known that the size of fat droplets has an impact on lipase activity. Thus, the inventors used *in-vitro* experiments with monodisperse O/W emulsions (37µm size) to avoid any error caused by variations in droplet size and to determine the kinetics of fat digestion independently from the oil droplet size.

Monodisperse O/W emulsions were prepared by a co-flow method based on the break off of oil drops from a tapered capillary, which is introduced into a co-flowing stream containing a water-emulsifier solution as continuous phase.

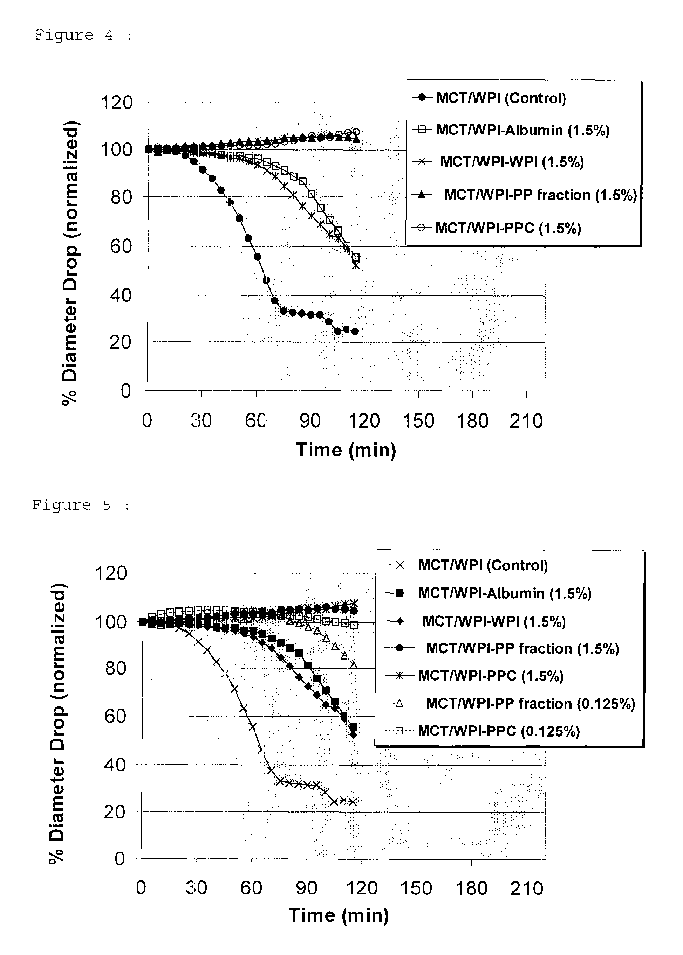

The *in-vitro* digestion experiments were performed by fluorescence microscopy. Time lapsed series of images were recorded from stained (by Nile red dye) emulsion droplets in a digestive intestinal medium (pH 7, bile salts, and pancreatic lipase P1750 from Sigma). By determining the time dependence in the decrease of the emulsion droplets size, the kinetics of emulsion digestion was retrieved. Figure 1 shows a typical series of images from a fluorescent labelled emulsion imaged by microscopy over a time frame of 2 hours under in-vitro GI conditions (a), from which the kinetic of emulsion digestion is obtained as the decrease in droplet diameter versus time (b).
1. Evidence for retardation of lipid hydrolysis by oil/water interface stabilization with the proteose peptone fraction:
   Monodispersed O/W emulsions with different type of milk proteins at the O/W interface have been prepared by the co-flow method. Medium Chain Triglycerides (MCT) have been used as oil phase and beta-lactoglobulin (BLG), beta-casein (BCN), whey protein isolate (WPI) and proteose peptone fraction as stabilizers dissolve into the aqueous phase. In-vitro digestion experiments have been performed on dyed emulsion droplets into a digestive intestinal medium (in the presence of bile salts, pancreatic lipase and at pH 7). The decrease in emulsion droplets size (due to oil droplet digestion by pancreatic lipase) has been followed by microscopy over 2 hours and the curve profiles for the kinetic of emulsion digestion have been obtained as the average droplets diameters over time. In Figure 4, the kinetic of digestion of four O/W emulsions are shown together with the curve profile obtained from the digestion of not stabilized MCT oil (control). For the control experiment, the digestive intestinal medium was added to MCT oil. The bile salts induced emulsification of oil (visible under the microscope by the formation of droplets), which allowed to perform fluorescence experiments on selected oil droplets having the same sizes of the emulsion droplets.
   The results in Figure 4 give evidence for a slower digestion kinetic when MCT oil is stabilized by the proteose peptone fraction. In particular, it can be seen that the oil droplets have lost 500 of their initial diameter after half an hour for MCT oil while, ca. one hour and a half is needed in the case of MCT/WPI emulsion and three hours and an half for MCT/proteose peptone fraction.
2. Evidence for retardation of lipid hydrolysis by addition of proteose peptone fraction in the aqueous bulk phase of an emulsion were the cil/water interface is not stabilized by the proteose peptone fraction
   Monodispersed O/W emulsions (MCT/WPI) have been prepared by the co-flow method described previously.

In-vitro digestion experiments have been carried out under simulated intestinal digestion conditions on MCT/WPI emulsions to which reference proteins (albumin, whey protein isolate) and the proteose peptone fraction were added. In Figure 5 the kinetics of digestion of MCT/WPI emulsion (control) is shown together with the curve profile obtained from the digestion of MCT/WPI emulsions to which albumin, WPI and proteose peptone fraction were added in the bulk aqueous phase at equal concentration (1.5 %, w/w). The data in Figure 5 also show a more pronounced delay of lipolysis when proteose peptone (PP) fraction is added to the aqueous phase of oil droplets precoated by a protein layer.

## Claims

1. Use of a proteose peptone fraction for the preparation of a lipid containing food product that exhibits a retarded lipid digestibility, wherein the proteose peptone fraction is obtainable by a process comprising the following steps:
- adjustment o:E the pH of a demineralised aqueous native protein dispersion to about 5.6 to 8.4, or to about 3.5 to 5.0
- heating the aqueous native protein dispersion to about 70-95 °C for about 10 seconds to 60 minutes
- removing at least a part of the formed solid large molecular weight aggrega.tes with a diameter of at least 100nm from the aqueous protein dispersion after heating and
- collecting the remaining liquid fraction of the dispersion.

2. Use in accordance with claim 1, wherein the proteose peptone fraction and the lipids are provided in a weight ratio in the range of 1:2 to 1:2000, preferably in the range of 1:10 to 1:100.

3. Use in accordance with one of claims 1-2, wherein the proteose peptone fraction and the lipids in the food product are provided at least in part as a coated oil droplet comprising at least one coating layer, wherein at least one coating layer contains proteose peptone.

4. Use in accordance with claim 3, wherein a coating layer containing proteose peptone is the outer coating layer.

5. Use in accordance with one of claims 3-4 comprising at least one further coating layer containing at least one protein fraction.

6. Use in accordance with claim 5, wherein the protein fraction contained in the at least one further coating layer is selected from the group consisting of beta-lactoglobulin, whey protein isolate or beta-casein.

7. Use in accordance with one of claims 3-6, wherein the coated oil droplet has a diameter in the range of 0.1 - 100 µm, preferably in the range of 1-50 µm.

8. Use in accordance with one of claims 3-7, wherein the coated oil droplet has a weight ratio of oil to proteose peptone in the range of 1:2 to 1:2000.

9. Use in accordance with one of claims 3-8, wherein at least 50 weight-% of the lipids in the food product are provided as coated oil droplets.

10. Use in accordance with one of the preceding claims, wherein the proteose peptone and the lipids are provided at least in part in the form of an emulsion.

11. Food product prepared by the use of one of claims 1-10 for use in the support of weight loss and/or weight maintenance in humans and/or animals.

12. Food product in accordance with claim 11 for use in the treatment or prevention of obesity.

13. Food product in accordance with one of claims 11 or 12 for use in the treatment or prevention of metabolic disorders.

14. Food product in accordance with claim 13, wherein the metabolic disorders are selected from the group consisting of diabetes, hypertension and cardiovascular diseases.
